# EUROPEAN PATENT SPECIFICATION

(11) **EP 2 130 192 B1**
(45) Date of publication and mention of the grant of the patent: **31.08.2011**
(21) Application number: 08840996.6
(22) Date of filing: 24.10.2008
(51) Int. Cl.: G08B 21/20

(54) **LIQUID DETECTING APPARATUS**
FLÜSSIGKEITSDETEKTOR
APPAREIL DE DÉTECTION DE LIQUIDE

(30) Priority: 26.10.2007 GB 0721030
(43) Date of publication of application: 09.12.2009
(73) Proprietor: Maxwell, Jenny, Netherton West Midlands DY2 9RH (GB)
(72) Inventor: Maxwell, Jenny, Netherton West Midlands DY2 9RH (GB)
(74) Representative: Gill, David Alan
(86) International application number: PCT/GB2008/003605
(87) International publication number: WO 2009/053706

(56) References cited:
- EP-A- 0 376 646
- DE-U1-202004 017 711
- US-A- 5 156 047
- US-A1- 2004 004 551
- US-A1- 2006 208 912
- US-A1- 2007 103 324

## Description

The present invention relates to a liquid detecting apparatus and particularly, but not exclusively, to a liquid detecting apparatus for detecting a level of a liquid in addition to presence of a liquid.

It is known that liquid ingress, such as water ingress, into spaces within residential or commercial premises, whether such ingress be from external sources (e.g. flood, leaking roof) or internal sources (e.g. overflowing bath/sink, or leak from radiator, boiler, water tank, etc.), can cause a large amount of damage and can prove costly to repair.

Similarly, water borne vessels which become "holed" allow water ingress into the internal spaces of the boat, which can cause damage to the interior of the boat and, ultimately, can cause the boat to sink.

Further, in warehouses storing dangerous liquids in drums, should one of the drums be pierced or develop a hole, the liquid leaking from the holed drum could cause not only damage, but could also be potentially dangerous.

US 7,253,741 B2 discloses a sensor to monitor for water leaks, with the sensor comprising two conductive circuits arranged such that water coming into contact with the two conductive circuits effectively "bridges" the circuits causing a complete circuit to be formed. Thus, the sensor can monitor for presence of water in an area where the sensor is located. Further, the sensor is coupled with a component which is arranged to forward an alert message to a mobile phone to provide a warning that there is a water leak.

GB 2,386,685 discloses a similar device for the detection of water in an area where the device is located. The device comprises two conductive circuits (terminals) which are arranged for location just above floor level. If water reaches the terminals it completes the electric circuit comprising the terminals, and a signal is generated which activates an alarm coupled to the device.

Whilst the above disclosed devices can detect the mere presence of water, they are not arranged to detect the level of the water, and nor can they allow a user to monitor the speed at which the water ingress is occurring, and thus changes in the water level.

DE 20 2004 017711 discloses a filling level monitoring arrangement which has at least two conducting electrodes and an electrode connection head. The electrodes are immersed in an electrically conducting medium and evaluation and control electronics determine the medium level. The electronics are integrated in the connection head. An alternating voltage is applied between a first reference electrode and at least one other electrode. The filling level is determined from the measured voltage.

The present invention seeks to provide for a liquid detecting apparatus having advantages over known such liquid detecting apparatus.

According to an aspect of the present invention, there is provided a liquid detecting apparatus for monitoring for the ingress of liquid into a region being monitored, the apparatus being arranged for measuring a level of liquid in said region and comprising: a sensing array comprising a plurality of sensors arranged to output a signal when in contact with a liquid; a processing means to which said array is electrically coupled, the processing means being arranged to determine the level of said liquid in said region based upon which one or more of said plurality of sensors is in contact with said liquid; and a communication means coupled to said processing means and arranged to transmit at least one data signal indicative of the liquid level determined by said processing means to a remote location, wherein the liquid detecting apparatus comprises means for transmitting said at least one data signal indicative of the liquid level determined by said processing means to said remote location only when a liquid level has increased.

The present invention is advantageous in that through the use of a plurality of sensors, the water level can be determined over a range (rather than a mere determination that the water level is above or below a sensor). Such an arrangement offers a user the benefit of being able to gauge the severity of liquid ingress based upon the determined liquid level. Additionally, a user can determine the speed of liquid ingress based upon the elapsed time between each notification that the liquid has risen to the next level.

Preferably, each of said plurality of sensors comprises a detecting terminal, and wherein said array further comprises at least one reference terminal, the array being arranged such that when a liquid contacts both said at least one reference terminal and at least one of said plurality of detecting terminals, an electric circuit is completed between at least one of said detecting terminals and said at least one reference terminal, and said signal is forwarded to said processing means.

Conveniently, each detecting terminal comprises a conductive track, and where each conductive track is arranged in parallel with an adjacent conductive track, and where the tracks are in a vertical direction in a normal orientation of said sensing array.

Also, each conductive track offers a stepped configuration relative to an adjacent track.

Further, in a normal orientation of said apparatus, said plurality of sensors of said sensing array are disposed at intervals in a substantially vertical direction.

If required, the processing means is arranged to monitor liquid level periodically.

Preferably, said at least one data signal indicative of the liquid level determined by said processing means is transmitted as a mobile communications device-compatible signal.

According to another aspect of the present invention, there is provided a process for detecting ingress of a liquid into a region and for measuring a level of liquid in said region, characterised by the steps of: determining if any one or more of a plurality of sensors is in contact with a liquid and determining the level of said liquid based upon which one or more of the plurality of sensors is in contact with the liquid; if it is determined that the said any one or more of a plurality of sensors is in contact with a liquid, determining if the said any one or more of the plurality of sensors was in contact with a liquid during a previous determination step; if it is determined that the said any one or more of the plurality of sensors was not in contact with liquid during the previous determination step, signalling a notification that liquid has entered said region, or that a liquid level has increased since a previous determination, wherein said notification comprises the determined level of said liquid.

Preferably, the process further comprises the step of determining if the said any one or more sensors is no longer in contact with the liquid during a yet further determining step and, if so, signalling that the liquid level has fallen.

Conveniently, the process further comprises the steps of: determining if a first of said plurality of sensors is in contact with a liquid; determining if said first of said plurality of sensors was in contact with a liquid during the previous determination step and, if it was previously determined that the first of said plurality of sensors' was not in contact with a liquid, sending a first message to a remote location as notification of this fact; determining if a second of a plurality of sensors is in contact with a liquid; determining if said second of a plurality of sensors was in contact with a liquid during the previous determination step and, if it was previously determined that the second of a plurality of sensors was not in contact with a liquid, sending a second message to a remote location as notification of this fact; determining if an (n-1)th of a plurality of sensors is in contact with a liquid; determining if said (n-1)th of a plurality of sensors was in contact with a liquid during the previous determination step and, if it was previously determined that the (n-1)th of a plurality of sensors was not in contact with a liquid, sending a (n-1)th message to a remote location as notification of this fact; determining if an (n)th of a plurality of sensors is in contact with a liquid; determining if said (n)th of a plurality of sensors was in contact with a liquid during the previous determination step and, if it was previously determined that the (n)th of a plurality of sensors was not in contact with a liquid, sending a (n)th message to a remote location as notification of this fact

Also, the process further comprises the step of starting a liquid pump to expunge liquid from a space in which it is detected, after positive determination that there is liquid in contact with the a particular one of said plurality of sensors.

In particular, the process further comprises the step of maintaining operation of said liquid pump until a liquid level has decreased to a predetermined amount.

The process further comprising the step of maintaining operation of said liquid pump until, a power source for said liquid pump is exhausted.

If required, the process further comprises the step of sending notification to said remote location that said power source for said liquid pump is exhausted.

The present invention is described further hereinafter, by way of example only, with reference to the accompanying drawings in which:
Fig. 1 illustrates a schematic diagram of a liquid detecting apparatus according to the present invention;
Fig. 2 illustrates a liquid level sensor of the liquid detecting apparatus of Fig. 1;
Fig. 3 illustrates a process implemented by the liquid detecting apparatus of Fig. 1 for detecting a liquid level and for notifying a user of the liquid level;
Fig. 4 illustrates a schematic diagram of a liquid detecting apparatus - according to the present invention in another embodiment;
Fig. 5 illustrates a schematic diagram of a use of the liquid detecting apparatus of Fig. 4;
Fig. 6 illustrates a process implemented by the liquid detecting apparatus of Fig. 4 for detecting a liquid level and for notifying a user of the liquid level.

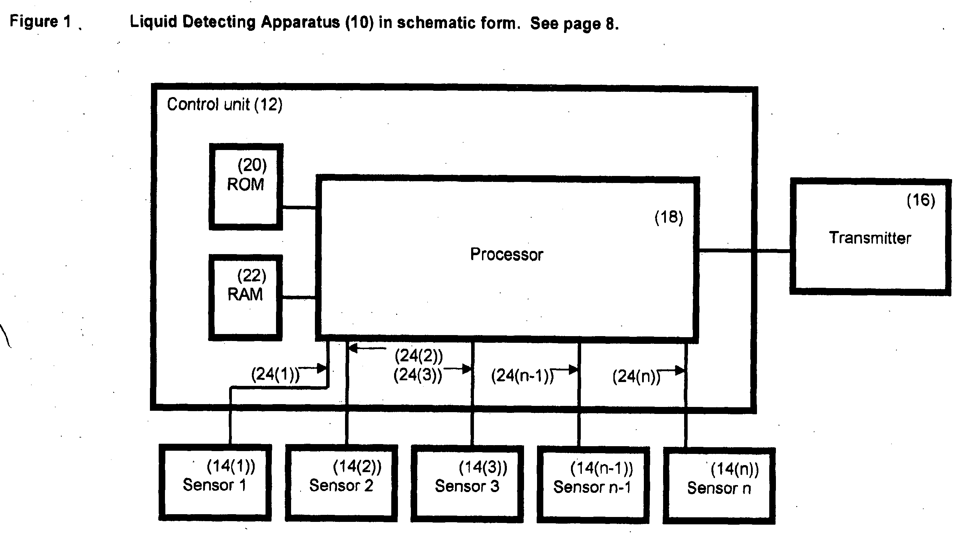

Fig. 1 illustrates a liquid detecting apparatus 10 in schematic form. The liquid detecting apparatus 10 comprises a control unit 12, a plurality of liquid level sensors 14(1)-14(n), and a transmitter 16. The control unit 12 comprises a processor 18, a read-only-memory (ROM) 20 and a random-access-memory (RAM) 22.

Each of the plurality of liquid level sensors 14(1)-14(n), transmitted 16, ROM 20 and RAM 22 are electronically coupled to said processor 18 to enable data transfer between the processor 18 and these elements, and vice versa. In particular, the liquid level sensors 14(1)-14(n) are each coupled to said processor by way of a corresponding multi-cored connecting cable 24(1)-24(n).

The liquid detecting apparatus 10 is arranged to monitor a space in which the plurality of liquid level sensors 14(1)-14(n) are installed to detect for the presence of liquid in said space and, if liquid is detected, to monitor a level of the liquid in said space.

The plurality of liquid level sensors 14(1-14(n) may be installed at various locations in a single space, or may be installed in several different spaces, with the control unit 12 and transmitter 16 located at a suitable central location.

Upon detection of the presence of a liquid by one (or more) of said plurality of liquid level sensors 14(1)-14(n), a data signal indicating the presence of liquid and the liquid level as measured by the sensor 14(1)-14(n) is forwarded to the processor 18 which processes the data signal by way of a suitable program stored in said ROM 20 and through use of said RAM 22, and then forwards the data for storage in ROM 20.

In addition to storing the data in ROM 20, the processor also forwards the data to said transmitter 16 for onward transmission to a remote location to provide an alert that liquid has been detected in said space and to provide an indication of the measured liquid level. Depending on the measured liquid level, the processor 18 can attach a priority level to the transmitted data to notify a recipient receiving the data at said remote location whether or not the situation must be dealt with as a matter or urgency. Additionally, or alternatively, signals from liquid level sensors 14(1)-14(n) located in more sensitive areas may have a higher priority attached to their data than those in less sensitive areas. Based upon the data received by the recipient, the recipient can then arrange for corrective action to be taken.

According to the invention and in addition to the above, the processor 18, after processing of the one (or more) data signals received from said liquid level sensors 14(1)-14(n), automatically compares the current data set with previously recorded data sets (which may be stored in ROM 20) to determine if there is liquid present, or if there is any change in liquid level. Indeed, if the liquid level has increased above that measured previously, the processor 18 is arranged to transfer further data signals for transmission by said transmitter 16 to provide a recipient with details regarding the rising liquid level.

The liquid detecting apparatus 10 of the present invention is arranged to be compatible with a communication network such that data relating to the presence of liquid and a liquid level can be transferred to a remote location as described above. In this regard, the transmitter 16 of the liquid detecting apparatus 10 may comprise mobile phone technology for transmitting data to the remote location, which may be, for example, a recipient's mobile phone.

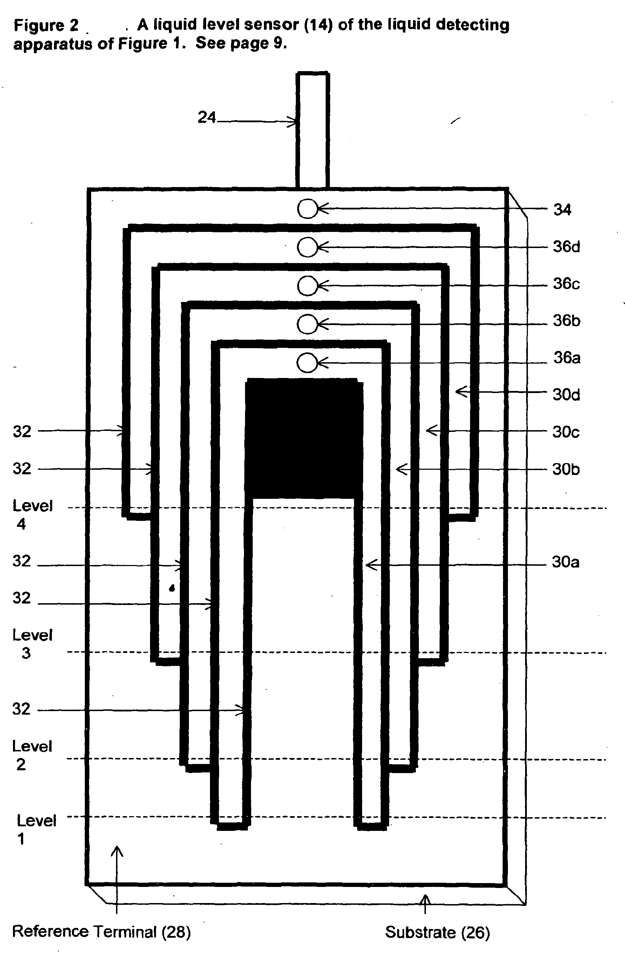

Fig. 2 illustrates one 14 of said plurality of liquid level sensors 14(1)-14(n) of Fig. 1.

The liquid level sensor 14 comprises a substantially planar substrate 26 upon which are formed a reference terminal 28, and first, second, third and fourth liquid level measuring terminals 30a-30d respectively. The first, second, third and fourth liquid level measuring terminals 30a-30d each comprise tracks of a conductive material, and the reference terminal 28 comprises a region of the same conductive material. Regions 32 of insulating material are located around each of said first, second, third and fourth liquid level measuring terminals 30a-30d to electrically insulate these terminals from one another, and also from said reference terminal 28.

In the illustrated arrangement, the tracks of conductive material of the first, second, third and fourth liquid level measuring terminals 30a-30d are in a parallel stepped arrangement which is reflected about a line of symmetry.

Of course, other shapes of conductive material forming the first, second, third and fourth liquid level measuring terminals 30a-30d can be provided. In the preferred arrangement of the liquid level sensor 14 (as illustrated in Fig. 2), the reference terminal 28 is located around the periphery of the surface of the substrate 26. The first, second, third and fourth liquid level measuring terminals 30a-30d are then arranged such that, in the normal orientation of the liquid level sensor 14 (as illustrated in Fig. 2), at least part of the first liquid level measuring terminal 30a extends to a portion on the surface of the substrate near a bottom edge of the substrate (as in the illustrated orientation). This furthest extent of the first liquid level measuring terminal 30a is denoted as "Level 1". Similarly, at least part of the second liquid level measuring terminal 30b extends to a portion on the surface of the substrate near a bottom edge of the substrate (as in the illustrated orientation), but not as close to the bottom edge as first liquid level measuring terminal 30a. This furthest extent of the second liquid level measuring terminal 30b is denoted as "Level 2". At least part of the third liquid level measuring terminal 30c extends to a portion on the surface of the substrate just below the mid-point between the bottom and top edges of the substrate (as in the illustrated orientation). This furthest extent of the third liquid level measuring terminal 30c is denoted as "Level 3". Finally, at least part of the fourth liquid level measuring terminal 30d extends to a portion on the surface of the substrate above the mid-point between the bottom and top edges of the substrate (as in the illustrated orientation), and this furthest extent of the fourth liquid level measuring terminal 30d is denoted as "Level 4".

Of course, other suitable arrangements will be apparent to those skilled in the art: it is merely the levels defined by the liquid level measuring terminals which are important.

The liquid level sensor 14 of Fig. 2 is coupled to the processor (not shown) by multi-cored connecting cable 24. Each core of the multi-cored connecting cable 24 terminates in a coupling, and a reference coupling 34 links one core of the multi-cored connecting cable 24 to the reference terminal 28. Further, first, second, third and fourth couplings 36a-36d link cores of the multi-cored connecting cable 24 to corresponding ones of the first, second, third and fourth liquid level measuring terminals 30a-30d respectively.

The arrangement of the liquid level sensor 14 is such that a liquid contacting one of the first, second, third and fourth liquid level measuring terminals 30a-30d and the reference terminal 28 effectively "bridges" the insulating tracks 32 separating the first, second, third and fourth liquid level measuring terminals 30a-30d from the reference terminal 28, thereby allowing an electric current to flow between one, or more, of the first, second, third and fourth liquid level measuring terminals 30a-30d and the reference terminal 28.

In operation, the processor (not shown) is arranged to cause an electric current to flow through one core of the multi-cored connecting cable 24 to the reference terminal 28. If liquid is present in the space in which the liquid level sensor 14 is located, and the liquid is in contact with the sensor, the liquid will provide a route for the current back to the processor through one, or more, of the first, second, third and fourth liquid level measuring terminals 30a-30d, and the cores of the multi-cored connecting cable 24 to which the first, second, third and fourth liquid level measuring terminals 30a-30d are coupled. Of course, the core(s) through which the electric current will complete its return journey to the processor will depend upon which one (or more) of the first, second, third and fourth liquid level measuring terminals 30a-30d the liquid is in contact with.

If the liquid level is between "Level 1" and "Level 2", the liquid will allow current to flow between the reference terminal 28 and the first liquid level measuring terminal 30a, and along the core of the multi-cored connecting cable 24, to which the first liquid level measuring terminal 30a is coupled, for reception by the processor.

If the liquid level is between "Level 2" and "Level 3", the liquid will allow current to flow between the reference terminal 28 and both the first and second liquid level measuring terminals 30a, 30b and along the two corresponding cores of the multi-cored connecting cable 24, to which the first and second liquid level measuring terminals 30a, 30b are coupled, for reception by the processor.

Similarly, if the liquid level is between "Level 3" and "Level 4", the liquid will allow current to flow between the reference terminal 28 and the first, second and third liquid level measuring terminals 30a, 30b, 30c and along the three corresponding cores of the multi-cored connecting cable 24, to which the first, second and third liquid level measuring terminals 30a, 30b, 30c are coupled, for reception by the processor.

Finally, if the liquid is above "Level 4", the liquid will allow current to flow between the reference terminal 28 and the first, second third and fourth liquid level measuring terminals 30a, 30b, 30c, 30d and along the four corresponding cores of the multi-cored connecting cable 24, to which the first, second, third and fourth liquid level measuring terminals 30a, 30b, 30c, 30d are coupled, for reception by the processor.

The processor is arranged to determine the liquid level based upon the core(s) through which it receives the electric current and the data transmitted to said recipient is then based upon this determination.

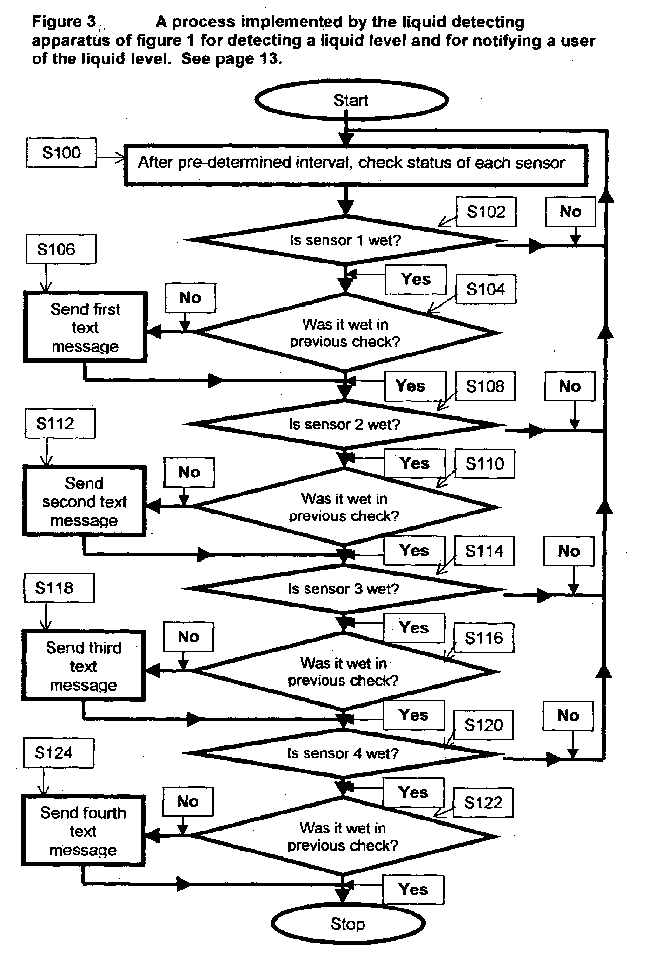

Fig. 3 illustrates a preferred embodiment of the process which the processor 18 of the liquid detecting apparatus 10 of Fig. 1 implements to detect for the presence of liquid in a space and to detect the level of liquid in the space. In this preferred embodiment, the processor does not transmit a continuous electric current to the reference terminal but, rather, transmits the electric current at predetermined intervals in order to conserve power.

At step S100, the processor checks the status of each of the first to fourth liquid level measuring terminals by transmitting an electric current to the reference terminal. The processor then proceeds to determine if there is liquid in contact with any of the first to fourth liquid level terminals to determine the level of liquid in the space. Thus, in step S102 the processor determines if there is liquid in contact with the first liquid level measuring terminal. If the result of this determination is that there is no liquid in contact with the first liquid level measuring terminal, the processor returns to the start of the process. However, if the result of this determination is that there is liquid in contact with the first liquid level measuring terminal, the processor proceeds to determine if there was liquid in contact with the first liquid level measuring terminal during the previous check (S104). If this is not the case, the processor forwards a signal to the transmitter for forwarding as a first text message to the recipient (S106) alerting them to the fact that liquid has entered the space since the last check and has risen to at least "Level 1", and the processor then proceeds to determine if there is liquid in contact with the second liquid level measuring terminal (S108). If, however, there was liquid in contact with the first liquid level measuring terminal during the previous check, the processor continues directly to step S108 without implementing step S106.

If the result of step S108 is that there is no liquid in contact with the second liquid level measuring terminal, the processor returns to the start of the process. However, if the result of this determination is that there is liquid in contact with the second liquid level measuring terminal, the processor proceeds to determine if there was liquid in contact with the second liquid level measuring terminal during the previous check (S110). If this is not the case, the processor forwards a signal to the transmitter for forwarding as a second text message to the recipient (S112) alerting them to the fact that liquid has risen to at least "Level 2" since the last check and the processor then proceeds to determine if there is liquid in contact with the third liquid level measuring terminal (S114). If, however, there was no liquid in contact with the second liquid level measuring terminal during the previous check, the processor continues directly to step S114 without implementing step S112.

If, after implementing step S114 the processor determines that there is no liquid in contact with the third liquid level measuring terminal, the processor returns to the start of the process. However, if the result of this determination is that there is liquid in contact with the third liquid level measuring terminal, the processor proceeds to determine if there was liquid in contact with the third liquid level measuring terminal during the previous check (S116). If this is not the case, the processor forwards a signal to the transmitter for forwarding as a third text message to the recipient (S118) alerting them to the fact that liquid has risen to at least "Level 3" since the last check and the processor then proceeds to determine if there is liquid in contact with the fourth liquid level measuring terminal (S120). If, however, there was liquid in contact with the third liquid level measuring terminal during the previous check, the processor continues directly to step S120 without implementing step S118.

If the result of step S120 is that there is no liquid in contact with the fourth liquid level measuring terminal, the processor returns to the start of the process. However, if the result of this determination is that there is liquid in contact with the fourth liquid level measuring terminal, the processor proceeds to determine if there was liquid in contact with the fourth liquid level measuring terminal during the previous check (S122). If this is not the case, the processor forwards a signal to the transmitter for forwarding as a fourth text message to the recipient (S124) alerting them to the fact that liquid has risen to at least "Level 4" since the last check. As the uppermost (in this embodiment) liquid level measuring terminal has been surpassed by the liquid level, the process is then terminated. If, however, there was liquid in contact with the fourth liquid level measuring terminal during the previous check, the process is terminated immediately.

As can be seen, the recipient will receive up to four text messages informing them of the increase in liquid level. The recipient can base the course of action in dependence upon the intervals between subsequent text messages. Of course, and as mentioned previously, text messages relating to data from liquid level measuring terminals in more sensitive areas can be tagged with a higher priority by the processor than those in less sensitive areas, so that the recipient can tailor their actions accordingly.

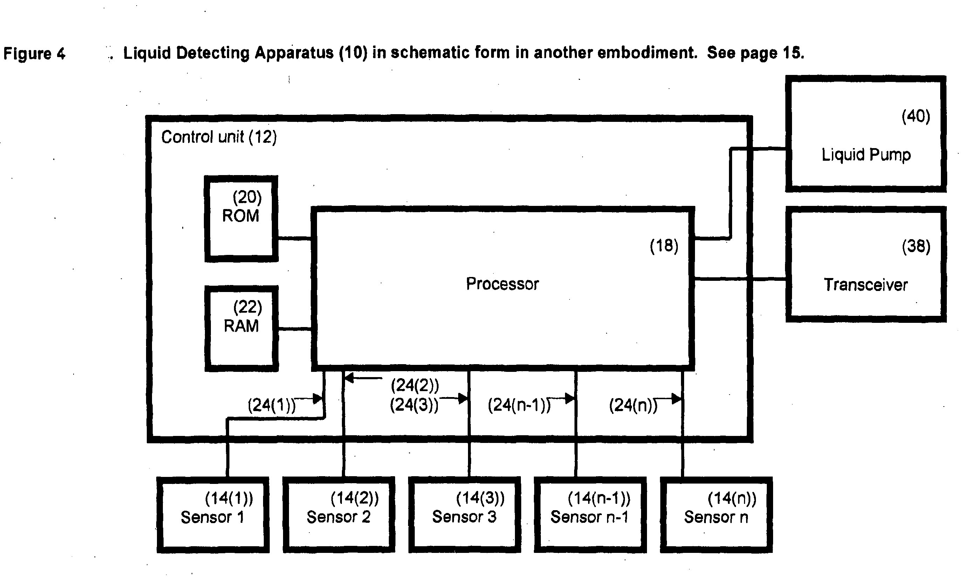

As stated above, Fig. 4 illustrates a schematic diagram of a liquid detecting apparatus according to the present invention in another embodiment and, preferably, for use onboard a boat. The features illustrated in Fig. 4 which correspond to features already described in relation to Fig. 1 are denoted by like reference numerals and will not be described further.

In the liquid detecting apparatus 10 of Fig. 4, the transmitter of Fig. 1 has been replaced by a transceiver 38, and the liquid detecting apparatus 10 further comprises a liquid pump 40. Both the transceiver 38 and liquid pump 40 are coupled to the processor 18. As previously described, the processor 18 is similarly arranged to forward signals to the transceiver 38 for forwarding (preferably as text messages) to a recipient at a remote location.

In this embodiment, the processor 18 is also arranged to control operation of the liquid pump 40 and can activate the liquid pump 40 to pump liquid from a space in which it is located to an external location. Such activation can either be in response to data received from one or more of said liquid level sensors 14(1)-14(n) or by way of a signal (received at said processor 18, via said transceiver 38, from said remote location) instructing that the liquid pump 40 be activated. For example, upon receiving a text message that liquid has entered a space being monitored, a user sends a text message to the liquid detecting apparatus 10 instructing that the liquid pump 40 be activated to pump liquid from the space to an external area.

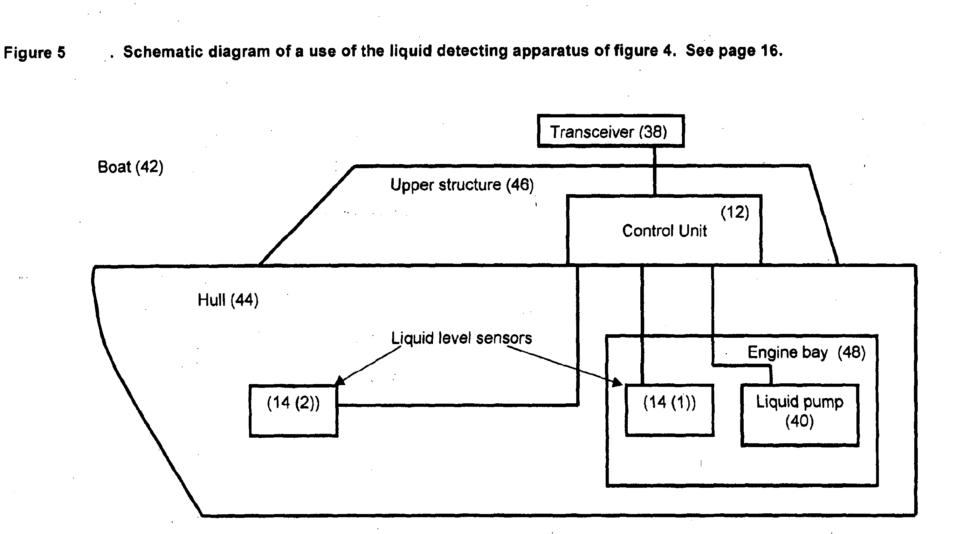

Fig. 5 illustrates the liquid detecting apparatus of Fig. 4 located in a boat 42 which comprises a hull 44 and an upper structure 46. In the schematic illustration of Fig. 5, the control unit 12 is located in the upper structure 46 of the boat 42 (preferably the living quarters) to allow easy access by a user. A first liquid level sensor 14(1) is located in an engine bay 48 in the hull 44 of said boat 42 and a second liquid level sensor 14(2) is located near the bow of the boat 42 in the hull 44. The illustrated first and second liquid level sensors 14(1), 14(2) are located on a port side of the boat 42 and third and fourth liquid level sensors (not shown) are located in similar positions on the starboard side of the boat 42.

A liquid pump 40 in the form of a bilge pump is also located in the engine bay 48. This liquid pump 40 is arranged to pump liquid which may have entered the engine bay 48 to the outside of the boat 42. As will be appreciated from the above description, the liquid pump 40 can be activated to begin expunging water from the engine bay 48 either based upon a signal sent automatically from the processor (not shown) of the control unit 18 upon determining that water has entered the engine bay 48 (i.e. based upon a signal received by the processor from the first-liquid level sensor 14(1) indicating that water has entered the engine bay 48), or in response to a text message received at said transceiver 38 instructing that the liquid pump 40 be activated (where the received text message is prompted by a previous text message transmitted via the transceiver 38 to the user based upon a determination by the processor that water has entered the engine bay 48).

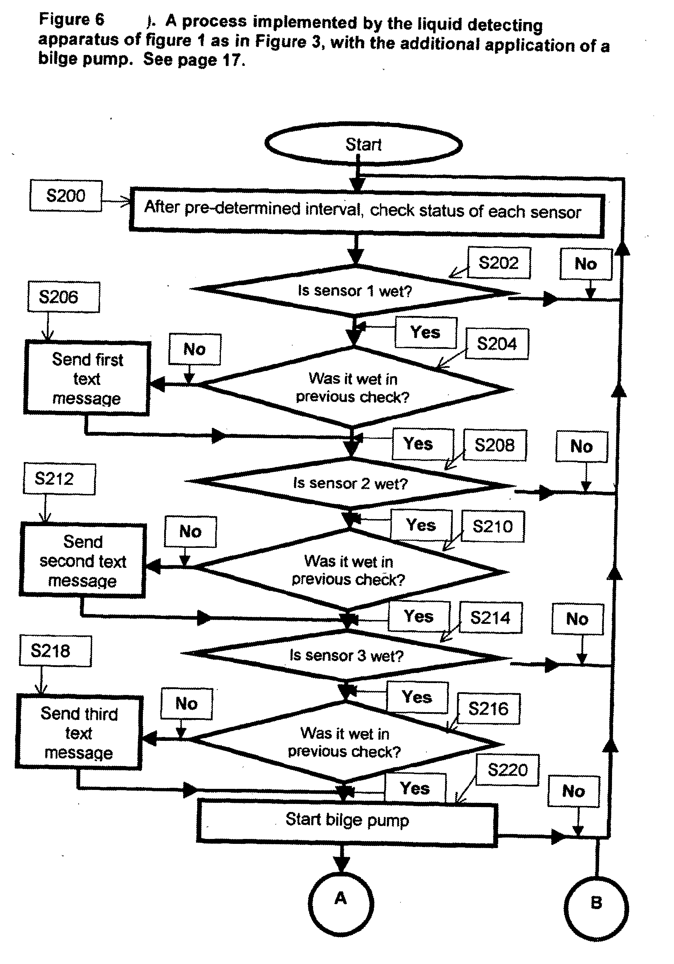

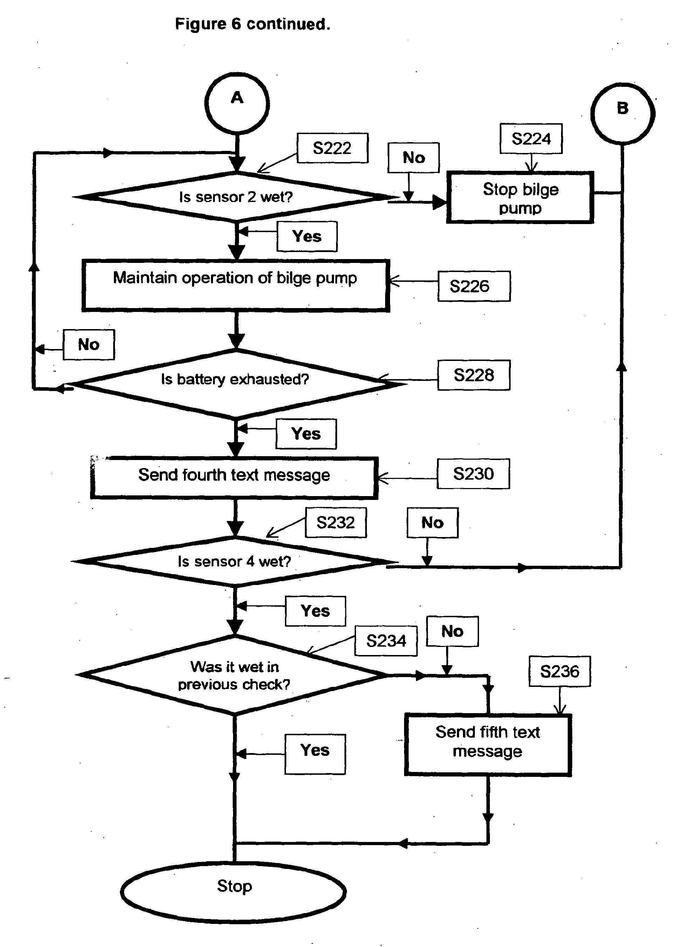

Fig. 6 illustrates a preferred embodiment of the process which the processor 18 of the liquid detecting apparatus 10 of Fig. 4 implements to detect for the presence of liquid (most likely, water) in a boat (such as in the arrangement of Fig. 5) and to detect the level of liquid in one or more compartments of the boat. In this preferred embodiment, the processor does not transmit a continuous electric current to the reference terminal but, rather, transmits the electric current at predetermined intervals in order to conserve power.

The following description relates to only the first liquid level sensor 14(1) of Fig. 5, but applies equally to the other sensors (i.e. second liquid level sensor 14(2), and the third and fourth liquid level sensors (not shown)).

At step S200, the processor checks the status of.each of the first to fourth liquid level measuring terminals of the first liquid level sensor 14(1) by transmitting an electric current to the reference terminal of the sensor. The processor then proceeds to determine if there is liquid in contact with any of the first to fourth liquid level measuring terminals and to determine the level of liquid in the particular compartment of the boat in which the first liquid level sensor 14(1) is located. Thus, in step S202 the processor determines if there is liquid in contact with the first liquid level measuring terminal. If the result of this determination is that there is no liquid in contact with the first liquid level measuring terminal, the processor returns to the start of the process. However, if the result of this determination is that there is liquid in contact with the first liquid level measuring terminal, the processor proceeds to determine if there was liquid in contact with the first liquid level measuring terminal during the previous check (S204). If this is not the case, the processor forwards a signal to the transmitter for forwarding as a first text message to the recipient (S206) alerting them to the fact that liquid has entered the space since the last check and has risen to at least "Level 1", and the processor then proceeds to determine if there is liquid in contact with the second liquid level measuring terminal (S208). If, however, there was liquid in contact with the first liquid level measuring terminal during the previous check, the processor continues directly to step S208 without implementing step S206.

If the result of step S208 is that there is no liquid in contact with the second liquid level measuring terminal, the processor returns to the start of the process. However, if the result of this determination is that there is liquid in contact with the second liquid level measuring terminal, the processor proceeds to determine if there was liquid in contact with the second liquid level measuring terminal during the previous check (S210). If this is not the case, the processor forwards a signal to the transmitter for forwarding as a second text message to the recipient (S212) alerting them to the fact that liquid has risen to at least "Level 2" since the last check and the processor then proceeds to determine if there is liquid in contact with the third liquid level measuring terminal (S214). If, however, there was liquid in contact with the second liquid level measuring terminal during the previous check, the processor continues directly to step S214 without implementing step S212.

If, after implementing step S214 the processor determines that there is no liquid in contact with the third liquid level measuring terminal, the processor returns to the start of the process. However, if the result of this determination is that there is liquid in contact with the third liquid level measuring terminal, the processor proceeds to determine if there was liquid in contact with the third liquid level measuring terminal during the previous check (S216). If this is not the case, the processor forwards a signal to the transmitter for forwarding as a third text message to the recipient (S218) alerting them to the fact that liquid has risen to at least "Level 3" since the last check and the processor then proceeds to start the liquid pump (S220) to begin pumping liquid out of the flooded compartment. If, however, there was liquid in contact with the third liquid level measuring terminal during the previous check, the processor continues directly to step S220 without implementing step S218.

The processor then proceeds to check if the second liquid level measuring terminal is wet (S222) to determine if the liquid level has decreased. If, upon completion of this check, it is determined that the second liquid level measuring terminal is dry (i.e. liquid is not in contact with the second liquid level measuring terminal), then the processor sends a signal to stop operation of the liquid pump (S224), and, then subsequently returns to the start of the process. However, if the processor determines that the second liquid level measuring terminal remains wet, the operation of the liquid pump continues (S226). The processor then checks a power source (e.g. battery) for the liquid pump to determine if the power source is exhausted (S228). If this is not the case, the processor returns to step S222, but it is found that the power source is indeed exhausted, then the processor proceeds to send a fourth text message to the recipient (S230) alerting them to the fact that the power source is exhausted

The processor then checks if there is liquid in contact with the fourth liquid level measuring terminal (S232). If the result of step S232 is that liquid is not in contact with the fourth liquid level measuring terminal, the processor returns to the start of the process. However, if the result of this determination is that there is liquid in contact with the fourth liquid level measuring terminal, the processor proceeds to determine if there was liquid in contact with the fourth liquid level measuring terminal during the previous check (S234). If this is not the case, the processor forwards a signal to the transmitter for forwarding as a fifth text message to the recipient (S236) alerting them to the fact that liquid has risen to at least "Level 4" since the last check. As the uppermost (in this embodiment) liquid level measuring terminal has been surpassed by the liquid level, the process is then terminated. If, however, there was no liquid in contact with the fourth liquid level measuring terminal during the previous check, the process is terminated immediately.

As can be seen, the recipient will receive text messages informing them of the increase in liquid level and of the status of the power source for the liquid pump. The recipient can base the course of action in dependence upon the intervals between subsequent text messages. Of course, and as mentioned previously, text messages relating to data from liquid level measuring terminals in more sensitive areas can be tagged with a higher priority by the processor than those in less sensitive areas, so that the recipient can tailor their actions still further.

It will be appreciated that the liquid detecting apparatus and corresponding process described above can be adapted to other situations. In particular, the liquid detecting apparatus could installed next to, for example, a bath or washing machine (perhaps on the wall of a tray in which the bath/washing machine sits) and could be arranged to notify a user of an overflowing bath/leaking washing machine. Similarly, in a warehouse (or similar facility) where hazardous liquids are stored in drums, the drums could be located in trays having the liquid detecting apparatus installed, and which is arranged to notify an appropriate person if a drum is leaking.

## Claims

1. A liquid detecting apparatus (10) for monitoring for the ingress of liquid into a region being monitored, the apparatus being arranged for measuring a level of liquid in said region and comprising: a sensing array (14(1) - 14(n)) comprising a plurality of sensors arranged to output a signal when in contact with a liquid; a processing means (18) to which said array is electrically coupled, the processing means being arranged to determine the level of said liquid in said region based upon which one or more of said plurality of sensors is in contact with said liquid; a communication means (16; 38) coupled to said processing means and arranged to transmit at least one data signal indicative of the liquid level determined by said processing means to a remote location; **characterised in that** it comprises means for transmitting said at least one data signal indicative of the liquid level determined by said processing means to said remote location only when a liquid level has increased.

2. An apparatus (10) according to Claim 1, wherein each of said plurality of sensors comprises a detecting terminal (30a - 30d), and wherein said array (14(1) - 14(n)) further comprises at least one reference terminal (28), the array being arranged such that when a liquid contacts both said at least one reference terminal and at least one of said plurality of detecting terminals, an electric circuit is completed between at least one of said detecting terminals and said at least one reference terminal, and said signal is forwarded to said processing means (18).

3. An apparatus (10) according to Claim 2, wherein each detecting terminal (30a - 30d) comprises a conductive track, and where each conductive track is arranged in parallel with an adjacent conductive

4. An apparatus (10) according to Claim 3, wherein each conductive track offers a stepped configuration relative to an adjacent track.

5. An apparatus (10) according to any one or more of the preceding claims, wherein in a normal orientation of said apparatus, said plurality of sensors of said sensing array (14(1) - 14(n)) are disposed at intervals in a substantially vertical direction.

6. An apparatus (10) according to any one or more of the preceding claims, wherein the processing means is arranged to monitor liquid level periodically.

7. An apparatus (10) according to any one or more of the preceding claims, further comprising means for transmitting said at least one data signal indicative of the liquid level determined by said processing means as a mobile communications device-compatible signal.

8. A process for detecting ingress of a liquid into a region and for measuring a level of liquid in said region, comprising the steps of: determining (S100. S102, S108, S194, S120; S200, S202, S208, S214, S222, S232) if any one or more of a plurality of sensors is in contact with a liquid and determining the level of said liquid based upon which one or more of the plurality of sensors is in contact with the liquid; if it is determined that the said any one or more of a plurality of sensors is in contact with a liquid, determining (S104, S110, S116, S122; S204, S210, S216, S234) if the said any one or more of the plurality of sensors was in contact with a liquid during a previous determination step; if it is determined that the said any one or more of the plurality of sensors was not in contact with liquid during the previous determination step, signalling (S106, S112, S118, S124; S206, S212, S218, S236) a notification that liquid has entered said region, or that a liquid level has increased since a previous determination, wherein said notification comprises the detected level of said liquid.

9. A process according to Claim 8, further comprising the step of determining if the said any one or more sensors is no longer in contact with the liquid during a yet further determining step and, if so, signalling that the liquid level has fallen.

10. A process according to Claim 8 or 9, further comprising the steps of: determining (S102; S202) if a first of said plurality of sensors is in contact with a liquid; determining (S104; S204) if said first of said plurality of sensors was in contact with a liquid during the previous determination step and, if it was previously determined that the first of said plurality of sensors was not in contact with a liquid, sending (S106; S206) a first message to a remote location as notification of this fact; determining (S108; S208) if a second of a plurality of sensors is in contact with a liquid; determining (S110; S210) if said second of a plurality of sensors was in contact with a liquid during the previous determination step and, if it was previously determined that the second of a plurality of sensors was not in contact with a liquid, sending (S112; S212) a second message to a remote location as notification of this fact; determining if an (n-1)th of a plurality of sensors is in contact with a liquid; determining if said (n-1)th of a plurality of sensors was in contact with a liquid during the previous determination step and, if it was previously determined that the (n-1)th of a plurality of sensors was not in contact with a liquid, sending a (n-1)th message to a remote location as notification of this fact; determining if an (n)th of a plurality of sensors is in contact with a liquid; determining if said (n)th of a plurality of sensors was in contact with a liquid during the previous determination step and, if it was previously determined that the (n)th of a plurality of sensors was not in contact with a liquid, sending a (n)th message to a remote location as notification of this fact.

11. A process according to any one or more of Claims 8 to 10, further comprising the step of starting (S220) a liquid pump (40) to expunge liquid from a space in which it is detected, after positive determination that there is liquid in contact with the a particular one of said plurality of sensors.

12. A process according to Claim 11, further comprising the step of maintaining (S226) operation of said liquid pump (40) until a liquid level has decreased to a predetermined amount and/or the step of maintaining operation of said liquid pump until a power source for said liquid pump is exhausted.

13. A process according to Claim 12, further comprising the step of sending notification (S230) to said remote location that said power source for said liquid pump (40) is exhausted.

## Patentansprüche

1. Vorrichtung (10) zum Erkennen von Flüssigkeit zum Überwachen des Eindringens von Flüssigkeit in eine Region, die überwacht wird, wobei die Vorrichtung dazu angeordnet ist, ein Niveau von Flüssigkeit in der genannten Region zu messen und Folgendes umfasst: eine Abfühlgruppierung (14(1) - 14(n)), die mehrere Sensoren umfasst, die dazu angeordnet sind, ein Signal auszugeben, wenn sie mit einer Flüssigkeit in Kontakt sind; ein Verarbeitungsmittel (18), an das die genannte Gruppierung elektrisch gekoppelt ist, wobei das Verarbeitungsmittel dazu angeordnet ist, das Niveau der genannten Flüssigkeit in der genannten Region basierend darauf zu bestimmen, welcher einer oder welche mehreren der genannten mehreren Sensoren mit der genannten Flüssigkeit in Kontakt sind; ein an das genannte Verarbeitungsmittel gekoppeltes Kommunikationsmittel (16; 38), das dazu angeordnet ist, mindestens ein, das von dem genannten Verarbeitungsmittel bestimmte Flüssigkeitsniveau angebendes Datensignal an einen abgesetzten Ort zu übertragen; **dadurch gekennzeichnet, dass** es Mittel zum Übertragen des genannten mindestens einen, das von dem Verarbeitungsmittel bestimmten Flüssigkeitsniveau angebenden Datensignals an den genannten abgesetzten Ort, nur wenn ein Flüssigkeitsniveau zugenommen hat, umfasst.

2. Vorrichtung (10) nach Anspruch 1, wobei die genannten mehreren Sensoren jeweils einen Erkennungsanschluss (30a - 30d) umfassen und wobei die genannte Gruppierung (14(1) - 14(n)) weiter mindestens einen Referenzanschluss (28) umfasst, wobei die Gruppierung derart angeordnet ist, dass wenn eine Flüssigkeit den genannten mindestens einen Referenzanschluss und mindestens einen der genannten mehreren Erkennungsanschlüsse berührt, ein elektrischer Kreis zwischen mindestens einem der genannten Erkennungsanschlüsse und dem genannte mindestens einen Referenzanschluss geschlossen wird und das genannte Signal an das genannte Verarbeitungsmittel (18) geschickt wird.

3. Vorrichtung (10) nach Anspruch 2, wobei die Erkennungsanschlüsse (30a - 30d) jeweils eine leitfähige Bahn umfassen und wobei die leitfähigen Bahnen jeweils parallel zu einer benachbarten leitfähigen Bahn angeordnet sind und wobei sich die Bahnen in einer normalen Orientierung der genannten Abfühlgruppierung in einer vertikalen Richtung befinden.

4. Vorrichtung (10) nach Anspruch 3, wobei die leitfähigen Bahnen jeweils eine abgestufte Ausbildung relativ zu einer benachbarten Bahn bieten.

5. Vorrichtung (10) nach einem oder mehreren der vorangehenden Ansprüche, wobei in einer normalen Orientierung der genannten Vorrichtung die genannten mehreren Sensoren der genannten Abfühlgruppierung (14(1) - 14(n)) in einer im Wesentlichen vertikalen Richtung in Abständen angeordnet sind.

6. Vorrichtung (10) nach einem oder mehreren der vorangehenden Ansprüche, wobei das Verarbeitungsmittel dazu angeordnet ist, das Flüssigkeitsniveau regelmäßig zu überwachen.

7. Vorrichtung (10) nach einem oder mehreren der vorangehenden Ansprüche, weiter umfassend Mittel zum Übertragen des genannten mindestens einen, das von dem genannten Verarbeitungsmittel bestimmten Flüssigkeitsniveau angebenden Datensignals als ein mit mobilen Kommunikationsvorrichtungen kompatibles Signal.

8. Verfahren zum Erkennen des Eindringens einer Flüssigkeit in eine Region und zum Messen eines Niveaus von Flüssigkeit in der genannten Region, das folgende Schritte umfasst: Feststellen (S100, S102, S108, S 114, S120; S200, S202, S208, S214, S222, S232), ob einer oder mehrere von mehreren Sensoren mit einer Flüssigkeit in Kontakt sind und Bestimmen des Niveaus der genannten Flüssigkeit basierend darauf, welcher einer oder welche mehreren der mehreren Sensoren mit der Flüssigkeit in Kontakt sind; wenn festgestellt wird, dass der genannte eine oder die genannten mehreren von mehreren Sensoren mit einer Flüssigkeit in Kontakt sind, Feststellen (S 104, S 110, S 116, S 122; S204, S210, S216, S234) ob der genannte eine oder die genannten mehreren der mehreren Sensoren während eines vorherigen Feststellungsschritts mit einer Flüssigkeit in Kontakt waren; wenn festgestellt wird, dass der genannte eine oder die genannten mehreren der mehreren Sensoren während des vorherigen Feststellungsschritts nicht mit Flüssigkeit in Kontakt waren, Signalisieren (S106, S 112, S 118, S124; S206, S212, S218, S236) einer Meldung, das Flüssigkeit in die genannte Region eingetreten ist oder dass ein Flüssigkeitsniveau seit einer vorherigen Feststellung zugenommen hat, wobei die genannte Meldung das erkannte Niveau der genannten Flüssigkeit umfasst.

9. Verfahren nach Anspruch 8, weiter umfassend den Schritt des Feststellens, ob der genannte eine oder die genannten mehreren Sensoren während noch eines weiteren Feststellungsschritts nicht mehr mit der Flüssigkeit in Kontakt sind und, falls ja, Signalisieren, dass das Flüssigkeitsniveau gesunken ist.

10. Verfahren nach Anspruch 8 oder 9, das weiter folgende Schritte umfasst: Feststellen (S102; S202), ob ein erster der genannten mehreren Sensoren mit einer Flüssigkeit in Kontakt ist; Feststellen (S 104; S204), ob der genannte erste der genannten mehreren Sensoren während des vorherigen Feststellungsschritts mit einer Flüssigkeit in Kontakt war und, wenn zuvor festgestellt wurde, dass der erste der genannten mehreren Sensoren nicht mit einer Flüssigkeit in Kontakt war, Schicken (S 106; S206) einer ersten Nachricht an einen abgesetzten Ort als Meldung dieser Tatsache; Feststellen (S 108; S208), ob ein zweiter von mehreren Sensoren mit einer Flüssigkeit in Kontakt ist; Feststellen (S 110; S210), ob der genannte zweite von mehreren Sensoren während des vorherigen Feststellungsschritts mit einer Flüssigkeit in Kontakt war und, wenn zuvor festgestellt wurde, das der zweite von mehreren Sensoren nicht mit einer Flüssigkeit in Kontakt war, Schicken (S112, S212) einer zweiten Nachricht an einen abgesetzten Ort als Meldung dieser Tatsache; Feststellen, ob ein (n-1)ter von mehreren Sensoren mit einer Flüssigkeit in Kontakt ist; Feststellen, ob der genannte (n-1)te von mehreren Sensoren während des vorherigen Feststellungsschritts mit einer Flüssigkeit in Kontakt war und, wenn zuvor festgestellt wurde, dass der (n-1)te von mehreren Sensoren nicht mit einer Flüssigkeit in Kontakt war, Schicken einer (n-1)ten Nachricht an einen abgesetzten Ort als Meldung dieser Tatsache; Feststellen, ob ein (n)ter von mehreren Sensoren mit einer Flüssigkeit in Kontakt ist; Feststellen, ob der genannte (n)te von mehreren Sensoren während des vorherigen Feststellungsschritts mit einer Flüssigkeit in Kontakt war und, wenn zuvor festgestellt wurde, dass der (n)te von mehreren Sensoren nicht mit einer Flüssigkeit in Kontakt war, Schicken einer (n)ten Nachricht an einen abgesetzten Ort als Meldung dieser Tatsache.

11. Verfahren nach einem oder mehreren der Ansprüche 8 bis 10, weiter umfassend den Schritt des Einschaltens (S220) einer Flüssigkeitspumpe (40), um Flüssigkeit aus einem Raum zu entfernen, in dem sie erkannt ist, nachdem eindeutig festgestellt wurde, dass Flüssigkeit mit einem bestimmten der genannten mehreren Sensoren in Kontakt ist.

12. Verfahren nach Anspruch 11, weiter umfassend den Schritt des Aufrecherhaltens (S226) des Betriebs der genannten Flüssigkeitspumpe (40), bis ein Flüssigkeitsniveau auf einen vorherbestimmten Betrag gesunken ist und/oder den Schritt des Aufrechterhaltens des Betriebs der genannten Flüssigkeitspumpe, bis eine Leistungsquelle für die genannte Flüssigkeitspumpe erschöpft ist.

13. Verfahren nach Anspruch 12, weiter umfassend den Schritt des Schickens einer Meldung (S230) an den genannten abgesetzten Ort, dass die genannte Leistungsquelle für die genannte Flüssigkeitspumpe (40) erschöpft ist.

## Revendications

1. Un appareil de détection de liquide (10) destiné à surveiller l'entrée de liquide dans une zone sous surveillance, l'appareil étant agencé de façon à mesurer un niveau de liquide dans ladite zone et comprenant : une matrice de détection (14(1) - 14(n)) comprenant une pluralité de capteurs agencés de façon à produire un signal lorsqu'ils sont en contact avec un liquide, un moyen de traitement (18) auquel ladite matrice est couplée électriquement, le moyen de traitement étant agencé de façon à déterminer le niveau dudit liquide dans ladite zone en fonction du capteur ou des capteurs de ladite pluralité de capteurs qui est/sont en contact avec ledit liquide, un moyen de communication (16, 38) couplé audit moyen de traitement et agencé de façon à transmettre au moins un signal de données indicatif du niveau de liquide déterminé par ledit moyen de traitement à un emplacement distant, **caractérisé en ce qu'**il comprend un moyen de transmission dudit au moins un signal de données indicatif du niveau de liquide déterminé par ledit moyen de traitement audit emplacement distant uniquement lorsqu'un niveau de liquide a augmenté.

2. Un appareil (10) selon la Revendication 1, où chaque capteur de ladite pluralité de capteurs comprend une borne de détection (30a - 30d), et où ladite matrice (14(1) - 14(n)) comprend en outre au moins une borne de référence (28), la matrice étant agencée de sorte que, lorsqu'un liquide entre en contact avec à la fois ladite au moins une borne de référence et au moins une borne de ladite pluralité de bornes de détection, un circuit électrique est établi entre au moins une desdites bornes de détection et ladite au moins une borne de référence, et ledit signal est transmis audit moyen de traitement (18).

3. Un appareil (10) selon la Revendication 2, où chaque borne de détection (30a - 30d) comprend une piste conductrice, et où chaque piste conductrice est agencée en parallèle avec une piste conductrice adjacente, et où les pistes sont dans une direction verticale dans une orientation perpendiculaire à ladite matrice de détection.

4. Un appareil (10) selon la Revendication 3, où chaque piste conductrice présente une configuration en escalier par rapport à une piste adjacente.

5. Un appareil (10) selon l'une quelconque ou plusieurs des Revendications précédentes, où dans une orientation perpendiculaire dudit appareil, ladite pluralité de capteurs de ladite matrice de détection (14(1) - 14(n)) sont disposés à des intervalles dans une direction sensiblement verticale.

6. Un appareil (10) selon l'une quelconque ou plusieurs des Revendications précédentes, où le moyen de traitement est agencé de façon à surveiller périodiquement le niveau de liquide.

7. Un appareil (10) selon l'une quelconque ou plusieurs des Revendications précédentes, comprenant en outre un moyen de transmission dudit au moins un signal de données indicatif du niveau de liquide déterminé par ledit moyen de traitement sous la forme d'un signal compatible avec un dispositif de communication mobile.

8. Un processus de détection de l'entrée d'un liquide dans une zone et de mesure d'un niveau de liquide dans ladite zone, comprenant les opérations suivantes : la détermination (S 100, S102, S 108, S114, S120 ; S200, S202, S208, S214, S222, S232) si l'un quelconque ou plusieurs capteurs d'une pluralité de capteurs est en contact avec un liquide et la détermination du niveau dudit liquide en fonction du capteur ou des capteurs de la pluralité de capteurs qui est/sont en contact avec le liquide ; s'il est déterminé que ledit un quelconque ou plusieurs capteurs d'une pluralité de capteurs est en contact avec un liquide, la détermination (S 104, S110, S 116, S122 ; S204, S210, S216, S234) si ledit un quelconque ou plusieurs capteurs de la pluralité de capteurs était en contact avec un liquide au cours d'une opération de détermination précédente ; s'il est déterminé que ledit un quelconque ou plusieurs capteurs de la pluralité de capteurs n'était pas en contact avec du liquide au cours de l'opération de détermination précédente, l'envoi (S106, S112, S118, S124 ; S206, S212, S218, S236) d'une notification que du liquide est entré dans ladite zone, ou qu'un niveau de liquide a augmenté depuis une détermination précédente, où ladite notification contient le niveau détecté dudit liquide.

9. Un processus selon la Revendication 8, comprenant en outre l'opération de détermination si ledit un quelconque ou plusieurs capteurs n'est plus en contact avec le liquide au cours d'une autre opération de détermination et, si c'est le cas, le signalement que le niveau de liquide a baissé.

10. Un processus selon la Revendication 8 ou 9, comprenant en outre les opérations suivantes : la détermination (S 102 ; S202) si un premier capteur de ladite pluralité de capteurs est en contact avec un liquide, la détermination (S104 ; S204) si ledit premier capteur de ladite pluralité de capteurs était en contact avec un liquide au cours de l'opération de détermination précédente et, s'il a été déterminé antérieurement que le premier capteur de ladite pluralité de capteurs n'était pas en contact avec un liquide, l'envoi (S 106 ; S206) d'un premier message à un emplacement distant en guise de notification de ce fait, la détermination (S108 ; S208) si un deuxième capteur d'une pluralité de capteurs est en contact avec un liquide, la détermination (S110 ; S210) si ledit deuxième capteur d'une pluralité de capteurs était en contact avec un liquide au cours de l'opération de détermination précédente et, s'il a été déterminé antérieurement que le deuxième capteur d'une pluralité de capteurs n'était pas en contact avec un liquide, l'envoi (S112 ; S212) d'un deuxième message à un emplacement distant en guise de notification de ce fait, la détermination si un (n-1)ème capteur d'une pluralité de capteurs est en contact avec un liquide, la détermination si ledit (n-1)ème capteur d'une pluralité de capteurs était en contact avec un liquide au cours de l'opération de détermination précédente et, s'il a été déterminé antérieurement que le (n-1)ème capteur d'une pluralité de capteurs n'était pas en contact avec un liquide, l'envoi d'un (n-1)ème message à un emplacement distant en guise de notification de ce fait, la détermination si un (n)ème capteur d'une pluralité de capteurs est en contact avec un liquide, la détermination si ledit (n)ème capteur d'une pluralité de capteurs était en contact avec un liquide au cours de l'opération de détermination précédente et, s'il a été déterminé antérieurement que le (n)ème capteur d'une pluralité de capteurs n'était pas en contact avec un liquide, l'envoi d'un (n)ème message à un emplacement distant en guise de notification de ce fait.

11. Un processus selon l'une quelconque ou plusieurs des Revendications 8 à 10, comprenant en outre l'opération de démarrage (S220) d'une pompe hydraulique (40) de façon à évacuer du liquide d'un espace dans lequel il est détecté, après une détermination positive qu'il y a du liquide en contact avec un capteur particulier de ladite pluralité de capteurs.

12. Un processus selon la Revendication 11, comprenant en outre l'opération de maintien (S226) du fonctionnement de ladite pompe hydraulique (40) jusqu'à ce qu'un niveau de liquide a diminué d'une quantité prédéterminée et/ou l'opération de maintien du fonctionnement de ladite pompe hydraulique jusqu'à ce qu'une source d'énergie pour ladite pompe hydraulique soit épuisée.

13. Un processus selon la Revendication 12, comprenant en outre l'opération d'envoi d'une notification (S230) audit emplacement distant indiquant que ladite source d'énergie pour ladite pompe hydraulique (40) est épuisée.
